# EUROPÄISCHE PATENTSCHRIFT

(11) **EP 3 479 688 B1**
(45) Veröffentlichungstag und Bekanntmachung des Hinweises auf die Patenterteilung: **24.02.2021**
(21) Anmeldenummer: 18188714.2
(22) Anmeldetag: 13.08.2018
(51) Int. Cl.: A01K 5/02

(54) **LANDWIRTSCHAFTLICHE ANLAGE UND SELBSTFAHRENDER ROBOTER**
AGRICULTURAL PLANT AND SELF-PROPELLED ROBOT
INSTALLATION AGRICOLE ET ROBOT AUTONOME

(30) Priorität: 02.11.2017 DE 202017106626 U
(43) Veröffentlichungstag der Anmeldung: 08.05.2019
(73) Patentinhaber: Trioliet B.V., 7575 BE Oldenzaal (NL)
(72) Erfinder: Liet, Robert Jan, 7573 CS Oldenzaal (NL)
(74) Vertreter: Grünecker Patent- und Rechtsanwälte PartG mbB

(56) Entgegenhaltungen:
- EP-A1- 2 263 452
- DE-A1- 2 344 596
- US-A- 2 685 863

## Beschreibung

Die Erfindung betrifft eine landwirtschaftliche Anlage gemäß Oberbegriff des Anspruchs 1 sowie einen selbstfahrenden Roboter gemäß Oberbegriff des Anspruchs 14.

Obwohl es bei automatischen landwirtschaftlichen Anlagen eine Tendenz zu auf Räder fahrenden Robotern gibt, besteht dennoch Bedarf für hängende Roboter, wenn z.B. verschiedene Stellen der Anlage oder verschiedene Gebäude auf unterschiedlichen Höhen liegen, die von bodengestützten Robotern nicht zu überwinden sind. Eine Hängeschienenstrecke mit Steigungen oder Gefällen und ein hängender Roboter ist eine Lösung dieser Problematik.

In solchen Anlagen landwirtschaftlicher Betriebe transportiert wenigstens ein an der Hängeschienenstrecke selbstfahrender Roboter als Fütterroboter beispielsweise Futter oder als Einstreuroboter Einstreumaterial, das an vorbestimmten Stellen vorbereitet und in den Behälter gefüllt wird, entweder zu Fütterstellen oder Einstreustellen oder zur Übergabe an einen Verteilroboter. Hängende Roboter können bis 3 t oder mehr wiegen (inklusive Ladung) und benötigen ein hohes Antriebsdrehmoment bzw. Bremsmoment, um Steigungen und Gefälle überwinden zu können bzw. an vorbestimmten Stellen anzuhalten, oder bei Gefällen abzubremsen.

Beispiele solcher Anlagen bzw. Roboter sind enthalten in US-A 4,223,638, US-A 4,672,917, US-A 5,069,165 und US-A 4,981,107. Daraus sind zwei Antriebssysteme bekannt, gemäß denen der Roboter mit Kunststoff- oder Stahlrollen an der Hängeschienenstrecke hängt, wobei eine oder mehrere Rollen angetrieben und abgebremst werden. Aufgrund relativ kleiner Durchmesser der Rollen und glatter Oberflächen der Hängeschienenstrecke, auch abhängig von der Beladung des Behälters, ist das zu übertragende Antriebs- oder Bremsdrehmoment beschränkt. Dabei gibt es Antriebssysteme, bei denen die Aufhängung mittels Laufrollen getrennt ist von den angetriebenen Rollen. Üblicherweise hängt der Behälter des Roboters mit einem oder mehreren Laufwagen an der Hängeschienenstrecke. Für die Antriebs- und Bremsdrehmomentübertragung kann ein Laufwagen oder können mehrere Laufwagen angetrieben sein. Die Hängeschienenstrecke enthält z.B. ein ortsfest verbautes IPE-Profil (I-Profil). Zum reibschlüssigen Antrieb lässt sich praktisch jede Fläche des IPE-Profils nutzen, beispielsweise der Hochsteg oder jeder Quersteg. Bevorzugt wird eine Übertragung am Hochsteg, da daran in Kurven der Hängeschienenstrecke weniger Schlupf auftritt. Die Hängeschienenstrecke wird außerhalb von Gebäuden mit einer Überdachung versehen, sodass Regen und Schnee nicht direkt an die Hängeschienenstrecke gelangen. Dennoch zeigt sich in der Praxis, dass Feuchtigkeit an der Hängeschienenstrecke Kondenswasser erzeugt, das Schlupf mit sich bringt oder bei niedrigen Temperaturen friert, wodurch der Reibschluss mit der Hängeschienenstrecke nachlässt oder wegfällt. Dies kann z.B. im Einfahrtsbereich in einen warmen Stall erfolgen. In engen Kurven oder an Abschnitten der Hängeschienenstrecke mit Steigung kann es vorkommen, dass der Roboter dann entweder nicht anhält und ohne Kontrolle mit hoher Geschwindigkeit die Steigung her abrutscht oder nicht in der Lage ist, den ansteigenden Abschnitt hochzufahren. Solche Betriebssituationen führen zu fallweise extremer Betriebsgefahr. Es zeigt sich auch, dass mit einem oder mehreren Reibrad-Antrieben unter optimalen Konditionen allenfalls Steigungen um etwa 14 % befahren werden können.

Bei der aus EP 2 263 452 A1 bekannten Fütteranlage für Fische ist der entlang der Hängeschienenstrecke verfahrbare Roboter im Fahrantrieb mit wenigstens einem Zahnrad ausgestattet, das in einen an der Hängeschienenstrecke fest verbauten Zahnriemen eingreift. Der Zahnriemen ist entlang der gesamten Hängeschienenstrecke vorgesehen, sodass der Roboter nur mit formschlüssiger Antriebsverbindung fahrbar ist.

Bei der aus US-A-2685863 bekannten Fütteranlage ist der an einer Hängeschienenstrecke verfahrbare Roboter im Fahrantrieb mit einem Zahnradantrieb versehen, dessen Zahnrad in ein an der Hängeschienenstrecke entlang deren Gesamterstreckung angebrachtes Zahnstangenprofil eingreift. Der Roboter ist nur mit der formschlüssigen Antriebsverbindung fahrbar.

Weiterer Stand der Technik ist enthalten in DE 23 44 596 A.

Der Erfindung liegt die Aufgabe zugrunde, eine landwirtschaftliche Anlage der eingangs genannten Art sowie einen selbstfahrenden Roboter anzugeben, mit denen auch Betriebssituationen einwandfrei beherrschbar sind, in denen wegen äußerer Einflüsse kein ausreichender Reibschluss möglich ist, d. h., auch kritische oder sehr steile Abschnitte problemlos durchfahren werden oder der Roboter dort sicher angehalten bleibt.

Die gestellte Aufgabe wird mit den Merkmalen des Anspruchs 1 und den Merkmalen des Anspruchs 14 gelöst.

Da in zumindest einem Abschnitt de Hängeschienenstrecke zwischen dem Roboter und der Hängeschienenstrecke eine formschlüssige Antriebsverbindung herstellbar ist, vermag der Roboter auch unter ungünstigen Außenbedingungen Steigungen und Gefälle oder grundsätzlich extreme Steigungen problemlos zu überwinden und jederzeit wie vorbestimmt sicher anzuhalten. Dies gilt beispielsweise auch beim Ein- oder Ausfahren in bzw. aus einem Stall, wo aufgrund der Temperaturunterschiede die Gefahr von Kondenswasser an der Hängeschienenstrecke besteht. Die formschlüssige Antriebsverbindung wird nur in solchen kritischen Abschnitten genutzt. Die formschlüssige Antriebsverbindung weil nicht reibungsabhängig, sondern funktioniert unter allen Betriebssituationen gleichartig gut. Da eine durchgehende Ausstattung der Hängeschienenstrecke mit dem Profil baulich aufwändig und teuer ist, sind nur kritische Abschnitte mit dem Profil ausgestattet, und weist der Fahrantrieb des Roboters eine Kombination aus einem Reibrad-Antrieb und einem formschlüssigen Antrieb, z. B. Zahnrad-Antrieb, auf, wobei, vorzugsweise, zwischen beiden Antriebsarten umgestellt werden kann. Dies bedeutet, dass der Roboter in problemlosen Abschnitten der Hängeschienenstrecke mittels des Reibrad-Antriebs angetrieben und abgebremst wird, und nur in kritischen Abschnitten über den Formschluss angetrieben und abgebremst wird.

Der selbstfahrende Roboter weist in seinem wenigstens einen Fahrantrieb ein drehantreibbares Antriebsrad mit formschlüssigen Eingriffselementen auf, sodass er mit entsprechenden, an der Hängeschienenstrecke zumindest abschnittsweise vorgesehenen Eingriffsvertiefungen das Antriebs- oder Brems-Drehmoment zuverlässig formschlüssig zu übertragen vermag. Zudem weist dessen Fahrantrieb eine Kombination eines Reibrad-Antriebs und eines formschlüssigen Zahnrad-Antriebs auf, wobei diese Kombination zwischen den beiden Antriebsarten umstellbar sein kann.

In einer günstigen Ausführungsform der Fütteranlage ist in dem Abschnitt der Hängeschienenstrecke ein Profil mit Eingriffsvertiefungen verbaut, und weist der zumindest eine Fahrantrieb des Roboters in den Eingriffsvertiefungen zum formschlüssig drehmomentübertragenden Eingriff bringbare Eingriffselemente auf. Auf diese Weise ist eine weitestgehend reibungsunabhängige Übertragung des Antriebs- bzw. Brems-Drehmoments sichergestellt, d. h., der Roboter kann nach Art einer Zahnradbahn Gefälle und Steigungen überwinden und auch an jeder vorbestimmten Stelle sicher anhalten.

In einer einfachen Ausführungsform ist das Profil an der Hängeschienenstrecke nach Art einer Zahnstange, vorzugsweise mit Gerad- oder Schrägverzahnung, ausgebildet, während die Eingriffselemente als Zähne eines Zahnrads oder Ritzels an diesen ausgebildet sind. Alternativ könnte das Profil als eine Art Rollengliederkette ausgebildet sein, deren Gelenke an der Hängeschienenstrecke festgelegt sind, und in die das Antriebsrad nach Art eines Kettenrads oder Ritzels eingreift. Als weitere Alternative könnte das Profil beispielsweise aus zwei beabstandeten Flacheisen mit dazwischen verankerten Querstiften oder Rollen für Zähne eines Antriebszahnrads (Kettenrad) ausgebildet sein, was die Anbringung an der Hängeschienenstrecke vereinfacht.

Zweckmäßig sind die Eingriffsvertiefungen des Profils gerundet, vorzugsweise etwa halbkreisförmig, und sind die Eingriffselemente mit runder Kontur ausgebildet. Auf diese Weise wird großflächiger Eingriff mit niedriger spezifischer Belastung sichergestellt. Zweckmäßig sind jedoch die Eingriffsvertiefungen und die Eingriffselemente normale Zähne und Zahnvertiefungen z.B. mit Evolventenform, sodass zwischen dem Antriebszahnrad und den Eingriffsvertiefungen Abwälzbewegungen auftreten.

Um demgegenüber den Verschleiß beim Eingriff zu minimieren, ist es zweckmäßig, wenn die Eingriffselemente am Zahnrad von quer- zum Profil orientierten Stiften gebildet sind, die entweder drehbar gelagert sind oder drehbare Hülsen tragen, sodass relative Abwälzbewegungen vermieden werden und mit Rollreibung gearbeitet wird.

In einer einfachen Ausführungsform weist das Zahnrad zwei beabstandete, z.B. miteinander verbundene Radscheiben auf, in denen jeweils die Enden entweder der Hülsen tragenden Stifte austauschbar und festverankert oder der hülsenfreien Stifte austauschbar und drehbar gelagert sind. Die Austauschbarkeit der formschlüssig kooperierenden Komponenten ist wichtig, da der Formschluss zwangsweise verschleißbehaftet ist.

Ebenfalls zum Minimieren des Verschleißes ist es zweckmäßig, dass zumindest die Eingriffsvertiefungen und/oder die Eingriffselemente aus gehärtetem Stahl bestehen.

Zweckmäßig ist der das Profil aufweisende Abschnitt der Hängeschienenstrecke ein Abschnitt mit einem Gefälle oder einer Steigung oder gegebenenfalls einer engen Kurve, weil in diesen Abschnitten der Hängeschienenstrecke die größte Gefahr eines zu schwachen Reibschlusses auftreten kann.

Das Profil kann an der Hängeschienenstrecke entweder austauschbar verbaut sein, oder alternativ sogar direkt eingeformt werden.

Bei einer zweckmäßigen Ausführungsform ist der Wirkdurchmesser des Zahnrad-Antriebs bzw. des Zahnrads kleiner als der Wirkdurchmesser des Reibrad-Antriebs. Dies bietet den Vorteil, in unkritischen Abschnitten der Hängeschienenstrecke mit gleicher Antriebsdrehzahl relativ schnell fahren zu können, hingegen in kritischen Abschnitten ein größeres Antriebs- oder Bremsmoment erzeugen zu können. Dies soll nicht ausschließen, die Wirkdurchmesser der beiden Antriebe gleich zu wählen, und den Fahrantrieb nicht umzustellen.

In einer zweckmäßigen Ausführungsform ist die Hängeschienenstrecke ein stehend verbauter-I-Träger (IPE-Profil), wobei dann der Reibrad-Antrieb am Hochsteg und der Zahnrad-Antrieb im Bereich eines Querstegs des I-Trägers angreifen kann.

In einer zweckmäßigen Ausführungsformen teilen sich der Reibrad-Antrieb und der Zahnrad-Antrieb eine gemeinsame Antriebswelle, die mit einem elektrischen oder hydraulischen Antriebsmotor und einer Bremsvorrichtung gekuppelt ist, gegebenenfalls über ein Reduktionsgetriebe. Dies bedeutet eine bauliche Vereinfachung und ist platzsparend. Alternativ können für den Reibrad-Antrieb und den Zahnrad-Antrieb getrennte Antriebswellen vorgesehen sein Auch falls mehrere Reibräder und/oder Zahnräder angetrieben sind.

In einer zweckmäßigen Ausführungsform weist der Reibrad-Antrieb wenigstens ein angetriebenes Reibrad und ein freilaufendes Reibrad auf, die wahlweise mit Federvorspannung an gegenüberliegende Seiten des Hochstegs anpressbar sind, wobei, vorzugsweise, das angetriebene Reibrad bei Eingriff der Eingriffselemente in den Eingriffsvertiefungen vom Hochsteg abhebbar ist, speziell bei unterschiedlichen Wirkdurchmessern. Die Anpresskräfte für das Reibrad und das Antriebszahnrad können im Gleichgewicht sein. Außerdem kann eine das Überspringen des Antriebszahnrads verhindernde Blockiervorrichtung im Federantrieb zweckmäßig sein.

Bei getrennten Wellen des Reibrad-Antriebs und des Zahnrad-Antriebs und gegebenenfalls getrennten Antriebsmotoren kann bei unterschiedlichen Wirkdurchmessern steuerungsseitig zwischen den Antriebsarten umgestellt werden. Baulich und steuerungstechnisch einfach sind jedoch das Profil das angetriebene Reibrad und das Zahnrad so aufeinander abgestimmt angeordnet, dass jede Eingriffsvertiefung mit ihrem Grund vom Hochsteg des I-Trägers einen Abstand hat, der sicherstellt, dass sobald die Eingriffselemente in die Eingriffsvertiefungen eingreifen, das angetriebene Reibrad automatisch vom Hochsteg abgedrückt und somit vorübergehend funktionslos wird, obwohl es weiterhin angetrieben wird.

In einer zweckmäßigen Ausführungsform ist das Profil entweder ein starres Profil oder eine Gliederkette, wie eine Rollengliederkette, und auf oder unter einem Quersteg des I-Profils verschraubt, vorzugsweise derart, dass sein Abstand vom Hochsteg nach Bedarf einstellbar ist.

Wie erwähnt, können der Reibrad-Antrieb und der Zahnrad-Antrieb des Roboters Räder auf separaten Wellen aufweisen, und, vorzugsweise, mit getrennten Antriebsmotoren und Bremsvorrichtungen gekoppelt sein.

Um den ordnungsgemäßen Eingriff zwischen den Eingriffselementen und den Eingriffsvertiefungen in dem Abschnitt der Hängeschienenstrecke sicherzustellen, und auch den Reibrad-Antrieb nur zur Übertragung des Antriebs- oder Brems-Drehmoments einzusetzen und von Führungsaufgaben des Roboters freizustellen, ist es zweckmäßig, wenn der jeweilige Fahrantrieb des Roboters zusätzlich mit starr verbauten, freilaufenden Stützrollen z.B. an beiden Seiten des Hochstegs und mit Laufrollen z.B. auf dem Quersteg abgestützt ist.

Um einen stabilen Lauf des Roboters sicherzustellen, ist es zweckmäßig, wenn der Roboter mit zwei beabstandeten Laufkatzen oder Laufwagen an der Hängeschienenstrecke fährt, wobei, vorzugsweise, nur eine Laufkatze den wenigstens einen Fahrantrieb aufweisen kann.

An dem selbstfahrenden Roboter kann der Fahrantrieb für den Reibrad-Antrieb wenigstens ein drehantreibbares Reibrad und für den formschlüssigen Zahnrad-Antrieb wenigstens ein drehbares Antriebselement mit den Eingriffselementen umfassen, vorzugsweise jeweils auf einer gemeinsamen Antriebswelle. Die Umstellung zwischen den beiden Antriebsarten kann wahlweise oder automatisch erfolgen.

Anhand der Zeichnungen werden Ausführungsformen des Erfindungsgegenstandes erläutert. Es zeigen:
- Fig. 1: eine perspektivische Seitenansicht eines Abschnitts einer Hängeschienenstrecke einer landwirtschaftlichen Anlage mit einem selbstfahrenden Roboter,
- Fig. 2: einen vergrößerten Ausschnitt aus Fig. 1,
- Fig. 3: eine Ansicht in Längsrichtung der Hängeschienenstrecke mit einem Fahrantrieb des Roboters,
- Fig. 4: eine Seitenansicht einer Betriebsphase des Roboters bei Nutzen eines Reibrad-Antriebs, und
- Fig. 5: eine Seitenansicht einer Betriebsphase des Roboters bei Nutzen einer formschlüssigen Antriebsverbindung zwischen dem Fahrantrieb und der Hängeschienenstrecke.

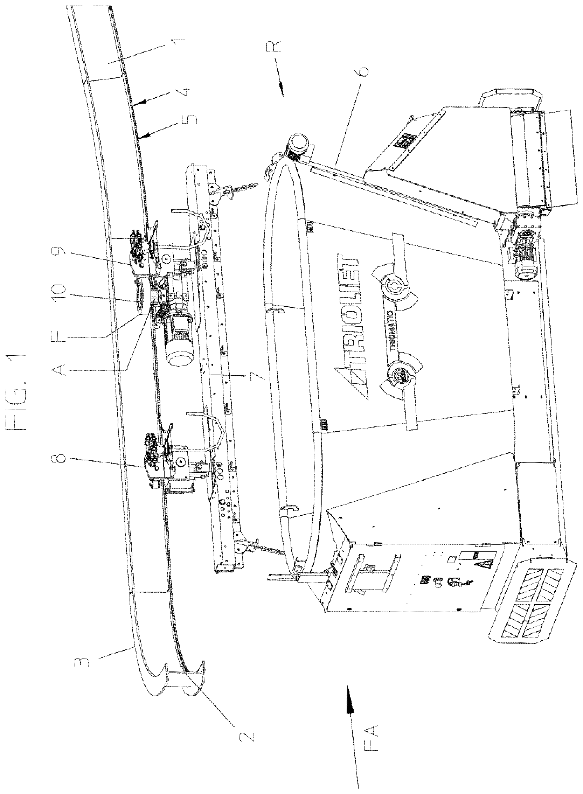

Fig. 1 zeigt einen Teil einer automatischen landwirtschaftlichen Anlage FA, beispielsweise für Nutzvieh, wie Rindvieh, mit einer ortsfest verbauten Hängeschienenstrecke 1 aus einem hochkant angeordneten I-Träger 2 (IPE-Profil), die z.B. auch einer Kurve 3 folgt und zu einer Steigung 4 führt. An der Hängeschienenstrecke 1 ist ein selbstfahrender Roboter R mit in der gezeigten Ausführungsform zwei Laufkatzen 8 und 9 abgehängt, der wenigstens einen Behälter 6 für Futter aufweist. Der Roboter R kann als Fütterroboter, Einstreuroboter oder Verteilroboter eingesetzt werden. Im Detail nicht näher hervorgehoben sind weitere Ausstattungen des Roboters R, wie eine Batterieanordnung, eine Steuerung für einen elektrischen oder hydraulischen Motor, Sensoren, eine Austragvorrichtung, oder dergleichen, wie es für solche Roboter R üblich ist. Nicht gezeigt ist ebenfalls eine durchgehend oder abschnittsweise installierte Stromschiene zur elektrischen Versorgung des Roboters R.

In der gezeigten Ausführungsform in Fig. 1 hängt der Behälter 6 an einer Traverse 7, die ihrerseits über die Laufkatzen 8, 9 an der Hängeschienenstrecke 1 hängt. Es weist nur die Laufkatze 9 einen Fahrantrieb 10 auf, obwohl auch die andere Laufkatze 8 einen Fahrantrieb haben könnte. Der Fahrantrieb 10 weist eine Kombination eines Reibrad-Antriebs F und eines Zahnrad-Antriebs A auf, die später im Detail erläutert werden. Beispielsweise in dem die Steigung 4 bildenden Abschnitt der Hängeschienenstrecke 1 ist ein Profil 5 verbaut, mit welchem der Zahnrad-Antrieb A in einer formschlüssig Antriebsverbindung zusammenwirken kann.

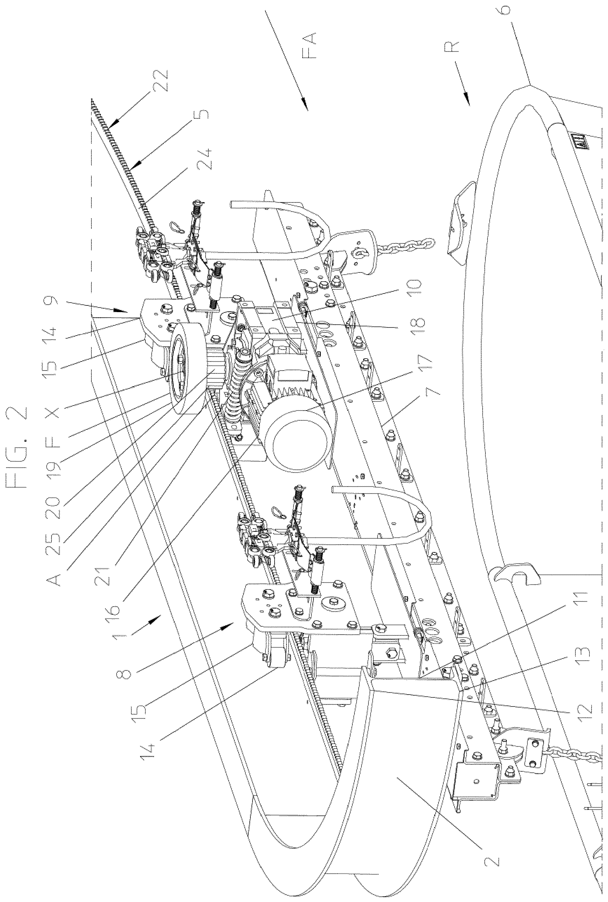

In der vergrößerten Darstellung in Fig. 2 ist zu erkennen, dass der I-Träger 2 obere und untere Querstege 12, 13 sowie einen Hochsteg 11 aufweist. Beide Laufkatzen 8, 9 weisen zusätzlich starr verbaute Stützrollen 14 auf, die an den gegenüberliegenden Seiten des Hochstegs 11 angreifen, sowie Stützrollen 15, die freilaufend sind und auf dem Quersteg 13 laufen.

Der Fahrantrieb 10 der Laufkatze 9 weist einen elektrischen oder hydraulischen Antriebsmotor 16, eine Bremsvorrichtung 17 und gegebenenfalls ein Reduktionsgetriebe 18 auf, um eine dem Reibrad-Antrieb F und dem Zahnrad-Antrieb A gemeinsame Antriebswelle X anzutreiben. Alternativ könnten getrennte Antriebswellen und getrennte Antriebsmotoren vorgesehen sein. Mit einem langsam laufenden Gleichstrommotor kann das Reduktionsgetriebe entfallen.

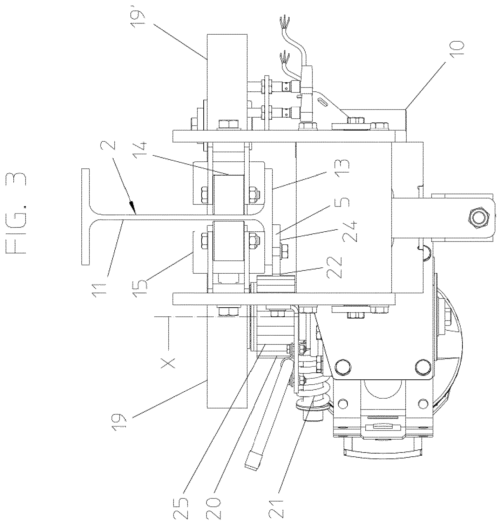

Das an der Unterseite des Querstegs 13 vorzugsweise austauschbar befestigte Profil 5 ist hier ein starres Profil 24 beispielsweise aus Stahl, das z.B. gegenüber dem Quersteg 13 zu einer Seite vorspringt und mit regelmäßig verteilten, hier seitlich offenen Eingriffsvertiefungen 22 mit dazwischenliegenden, Evolventen-Zähnen, ausgebildet ist. Der Reibrad-Antrieb F weist in der gezeigten Ausführungsform ein mit einer Gummi- oder Elastomerauflage (z.B. Neopren) ausgestattetes Reibrad 19 auf, das an eine Seite des Hochstegs 11 über eine Federanordnung 21 federvorgespannt anpressbar ist, und (in Fig. 2 nicht sichtbar) ein freilaufendes Reibrad (19' in Fig. 3), das ebenfalls unter der Federvorspannung gegen die gegenüberliegende Seite des Hochstegs 11 anpressbar ist.

Der Zahnrad-Antrieb A weist auf der mit dem Reibrad 19 gemeinsamen Welle X ein Antriebszahnrad 20 mit Eingriffselementen 25 z.B. Evolventen-Zahnform auf, die zum formschlüssigen Eingriff in die Eingriffsvertiefungen 22 des Profils 5 bestimmt sind und in Fig. 2 bereits im Eingriff sind. Da das Antriebszahnrad 20 und das Reibrad 19 unterschiedliche Wirkdurchmesser aufweisen (das Reibrad 19 ist größer als das Antriebszahnrad 20) ist in dieser Betriebsphase mit formschlüssiger Übertragung eines Antriebs- oder Brems-Drehmoments das Reibrad 19 vom Hochsteg 11 abgehoben und ist nur das Antriebszahnrad 20 mit dem Profil 5 in Eingriff.

In der Ansicht des Fahrantriebs 10 und des I-Profils 2 in dessen Längsrichtung in Fig. 3 sind die am Hochsteg 11 anliegenden Stützrollen 14 und die auf dem Quersteg 13 laufenden Laufrollen 15 ersichtlich, hinter denen sich die Reibräder 19 und 19' befinden, die von der Federeinrichtung 21 zueinander in Richtung zum Hochsteg 11 beaufschlagt werden. Da in der Betriebsphase in Fig. 3 die Eingriffselemente 25 des Eingriffszahnrades 20 auf der Welle X bereits in Eingriff sind mit den Eingriffsvertiefungen 22 des Profils 5, wird das weiterhin drehangetriebene Reibrad 19 vom Hochsteg 11 abgehoben. Das Antriebs- oder Brems-Drehmoment wird zwischen dem Antriebszahnrad 20 und dem Profil 5 formschlüssig übertragen.

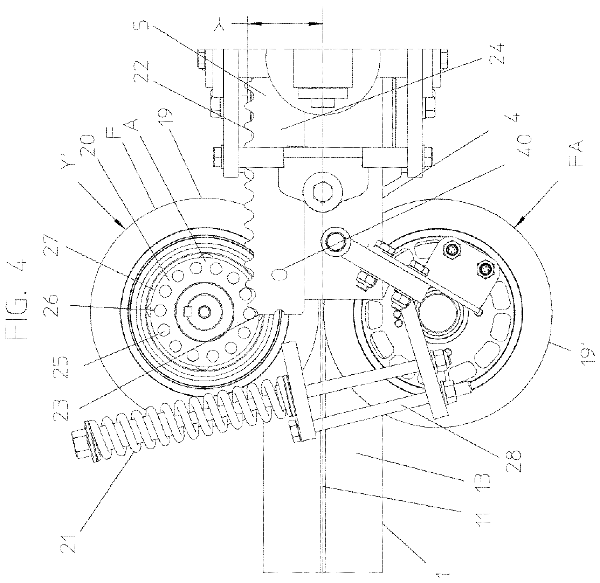

Fig. 4 verdeutlicht eine Betriebsphase, in der der selbstfahrende Roboter R in der Anlage FA mittels des Reibrad-Antriebs F gefahren wird, hingegen der Zahnrad-Antrieb A noch wirkungslos ist. Beide Reibräder 19, 19' werden über die Federeinrichtung 21 reibschlüssig an den Hochsteg 11 angepresst. Der Roboter R nähert sich dem Abschnitt 4 der Hängeschienenstrecke 1 beispielsweise von links. Das Profil 5, das nach Art einer Zahnstange ausgebildet und mit Langlöchern 40 am Quersteg 13 austauschbar verschraubt sein kann, besteht beispielsweise aus Stahl, der zumindest im Bereich der Eingriffsvertiefungen 22 gehärtet sein kann. Zum leichteren Eintritt der Eingriffselemente 25 des Antriebszahnrads 20 in das Profil 5 kann eine anfängliche Einführschräge 23 vorgesehen sein.

In der gezeigten Ausführungsform weist das Antriebszahnrad 20 zwei beabstandete und miteinander über die Welle X starr verbundene Radscheiben 27 auf, in welchen die Eingriffselemente 25 in Form von Querstiften mit ihren Enden befestigt sind. Die Kontur der Eingriffsvertiefungen 22 ist annähernd halbkreisförmig zwischen konvex gerundeten Zähnen, während der Außenumfang der Eingriffselemente 25 kreisrund sein kann. Die die Eingriffselemente 25 bildenden Stifte sind zweckmäßig in Drehlagern 26 (nicht im Detail gezeichnet, z.B. Gleitlager, Kugellager oder Nadellager). in den Radscheiben 27 drehbar und austauschbar gelagert und bestehen zweckmäßig aus Stahl, der gehärtet sein kann. Alternativ könnten die die Eingriffselemente 25 bildenden Stifte in den Radscheiben 27 austauschbar verankert sein und drehbare Hülsen (nicht gezeigt) tragen.

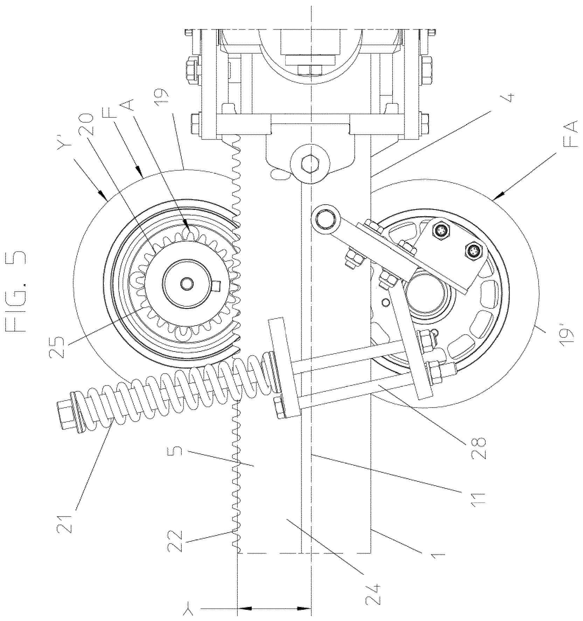

Alternativ (wie in Fig. 5 gezeigt) ist das Antriebszahnrad 20 nach Art eines Zahnrades mit Evolventen-Zähnen ausgebildet, und ist das Profil nach Art einer Zahnstange gestaltet.

Um sicherzustellen, dass dann bei Nutzen des Zahnrad-Antriebs A (siehe Fig. 5) das weiterhin drehangetriebene Reibrad 19 vom Hochsteg 11 abgehoben wird, sobald Eingriffselemente 25 in Eingriff in den Eingriffsvertiefungen 22 sind, ist jede Eingriffsvertiefung 22 vom Hochsteg 11 mit einem Abstand Y beabstandet, der so auf den Radius Y' des Reibrads 19 abgestimmt ist, dass das Reibrad 19 automatisch abgehoben wird. Auf diese Weise wird auch die Vorspannung der Federanordnung 21 genutzt, um die Eingriffselemente 25 in die Eingriffsvertiefungen 22 zu pressen. Die Anpresskräfte des Reibrads 19 und des Antriebszahnrads 20 sind zweckmäßig im Gleichgewicht. Das Umstellen zwischen den beiden Antriebsarten könnte jedoch auch auf andere Weise, z. B. steuerungstechnisch, vorgenommen werden.

In der Betriebsphase in Fig. 5 ist zumindest ein Eingriffselement 25 des Antriebszahnrads 20 in Eingriff mit einer Evolventen-Eingriffsvertiefung 22 des Profils 5, um das Antriebs- oder Brems-Drehmoment des Fahrantriebs 10 formschlüssig zu übertragen. Dank des auf den Radius Y' des drehangetriebenen Reibrades 19 abgestimmten Abstands Y der jeweiligen Eingriffsvertiefung 22 vom Hochsteg 11 ist das drehangetriebene Reibrad 19 vom Hochsteg 11 durch das kämmende Antriebszahnrad z.B. (Evolventenzahnform) gegen die Wirkung der Federeinrichtung 21 abgehoben und wird das Eingriffselement 25 entsprechend stark in die Eingriffsvertiefung 22 gepresst. Diese Eingriffssituation wird auch unterstützt durch die Wirkung der Stützrollen 14 und der Laufrollen 15. Die Anfangs- und Endbereiche des Profils 5 können formtechnisch so ausgebildet sein, dass sichergestellt ist, dass das drehangetriebene Reibrad 19 das erste Eingriffselement 25 sicher in die erste Eingriffsvertiefung 22 bringt bzw. der Roboter R vom drehangetriebenen Reibrad 19 zuverlässig aus dem Profil 5 herausgefahren wird.

In anderen Worten ist der Fahrantrieb so konzipiert, dass der Reibrad-Antrieb F den Zahnrad-Antrieb A in Funktion bringt und der Reibrad-Antrieb F erst dann freigeschaltet wird, bzw. das drehangetriebene Reibrad 19 schon wieder in Funktion gebracht wird, bevor der Zahnrad-Antrieb außer Funktion genommen wird.

In den Fig. 4 und 5 ist bei der Federeinrichtung 21 eine Blockierungsvorrichtung 28 (z.B. eine verstellbare Zugschraubspindel) vorgesehen, die zumindest ein Überspringen des Antriebsrads 20 verhindert.

Die Erfindung ist nicht auf die dargestellten konstruktiven Merkmale beschränkt. Das Profil 5 könnte auch an anderen Positionen der Hängeschienenstrecke 1 vorgesehen sein, als gezeigt Auch der Reibrad-Antrieb F und der Zahnrad-Antrieb A könnten anders gestaltet und positioniert sein.

## Patentansprüche

1. Landwirtschaftliche Anlage (FA), insbesondere für Nutzvieh, mit einer ortsfest verbauten Hängeschienenstrecke (1) und wenigstens einem hängend an der Hängeschienenstrecke (1) selbstfahrenden Roboter (R), der wenigstens einen Behälter (6) und wenigstens einen drehangetriebenen Roboter-Fahrantrieb (10) zum Fahren des Roboters (R) entlang der Hängeschienenstrecke (1) aufweist, wobei zum Übertragen von Fahr- und Brems-Drehmomenten zwischen dem Roboter (R) und der Hängeschienenstrecke (1) eine mechanische Antriebsverbindung vorgesehen ist und zumindest in einem Abschnitt (4) der Hängeschienenstrecke (1) zwischen dem Roboter-Fahrantrieb (10) des Roboters (R) und der Hängeschienenstrecke (1) eine formschlüssige Antriebsverbindung herstellbar ist, **dadurch gekennzeichnet, dass** der Roboter-Fahrantrieb (10) des Roboters (R) eine Kombination aus einem Reibrad-Antrieb (F) für eine reibschlüssige mechanische Antriebsverbindung mit der Hängeschienenstrecke (1) und einem Zahnrad-Antrieb (A) für die formschlüssige mechanische Antriebsverbindung mit der Hängeschienenstrecke (1) 1- ist, und dass der Roboter-Fahrantrieb (10) zwischen beiden Antrieben umstellbar ist.

2. Anlage nach Anspruch 1, **dadurch gekennzeichnet, dass** in dem, vorzugsweise, ein Gefälle oder eine Kurve aufweisenden Abschnitt (4) der Hängeschienenstrecke (1) ein, vorzugsweise, entweder austauschbar verbautes (bei (24) verschraubt) oder direkt eingeformtes Profil (5) mit Eingriffsvertiefungen (22), vorzugsweise aus gehärtetem Stahl, vorgesehen ist, und dass der Zahnradantrieb (A) des Roboters (R) in den Eingriffsvertiefungen (22) zum formschlüssig Drehmoment übertragenden Eingriff bringbare Eingriffselemente (25), vorzugsweise, aus gehärtetem Stahl, aufweist.

3. Anlage nach Anspruch 2, **dadurch gekennzeichnet, dass** das Profil (5) nach Art einer Zahnstange, vorzugsweise mit Evolventen-Gerad- oder Schrägverzahnung, und die Eingriffselemente (25) als Evolventen-Zähne eines Zahnrads oder Ritzels (20) ausgebildet sind.

4. Anlage nach Anspruch 2, **dadurch gekennzeichnet, dass** die Eingriffsvertiefungen (22) gerundet, vorzugsweise etwa halbkreisförmig, und die Eingriffselemente (25) mit runder Außenkontur ausgebildet sind.

5. Anlage nach wenigstens einem der vorhergehenden Ansprüche, **dadurch gekennzeichnet, dass** die Eingriffselemente (25) am Zahnrad (20) von quer zum Profil (5) orientierten Stiften gebildet sind, die entweder drehbar gelagert sind oder drehbare Hülsen tragen, und dass, vorzugsweise, das Zahnrad (20) zwei beabstandete, drehfest miteinander verbundene Radscheiben (27) umfasst, in denen jeweils die Hülsen tragenden Stifte austauschbar verankert oder die hülsenfreien Stifte austauschbar und drehbar gelagert sind.

6. Anlage nach Anspruch 1, **dadurch gekennzeichnet, dass** der Wirkdurchmesser des Zahnrad-Antriebs (A), bezogen auf die Hängeschienenstrecke (1), kleiner ist als der Wirkdurchmesser (Y') des Reibrad-Antriebs (F).

7. Anlage nach Anspruch 1, **dadurch gekennzeichnet, dass** die Hängeschienenstrecke (1) einen stehend verbauten I-Träger (2) aufweist, und dass der Reibrad-Antrieb (F) am Hochsteg (11) und der Zahnrad-Antrieb (A) im Bereich eines Querstegs (13) des I-Trägers (2) angreift, wobei, vorzugsweise, der Roboter-Fahrantrieb (10) zusätzlich mit starr verbauten, freilaufenden Stützrollen (14) an beiden Seiten des Hochstegs (11) und/oder mit Laufrollen (15) auf dem Quersteg (13) abgestützt ist.

8. Anlage nach Anspruch 1, **dadurch gekennzeichnet, dass** entweder sich der Reibrad-Antrieb (F) und der Zahnrad-Antrieb (A) eine gemeinsame Antriebswelle (X) teilen, die mit einem elektrischen oder hydraulischen Antriebsmotor (16) und einer Bremsvorrichtung (17) gekoppelt ist, oder der Reibrad-Antrieb (F) und der Zahnrad-Antrieb (A) separate Wellen aufweisen, und, vorzugsweise, getrennte Antriebsmotoren und Bremsvorrichtungen und ggf. Untersetzungsgetriebe für die Wellen vorgesehen sind.

9. Anlage nach Anspruch 1, **dadurch gekennzeichnet, dass** der Reibrad-Antrieb (F) wenigstens ein angetriebenes Reibrad (19) und ein freilaufendes Reibrad (19') aufweist, die wahlweise mit Federvorspannung einer Federeinrichtung (21) an gegenüberliegenden Seiten eines Hochstegs (11) der Hängestreckenschiene (1) anpressbar sind, wobei das angetriebene Reibrad (19) bei Eingriff der Eingriffselemente (25) am Profil (5) vom Hochsteg (11) abhebbar ist.

10. Anlage nach Anspruch 9, **dadurch gekennzeichnet, dass** jede Eingriffsvertiefung (22) vom Hochsteg (11) des I-Trägers (2) einen Abstand hat, der bezogen auf den Radius (Y') des drehangetriebenen Reibrads (19), so abgestimmt ist, dass bei Eingriff zwischen den Eingriffselementen (25) und den Eingriffsvertiefungen (22) das drehangetriebene Reibrad (19) vom Hochsteg abgehoben und die Eingriffselemente (25) in die Eingriffsvertiefungen (22) gepresst werden, vorzugsweise durch Federvorspannung der Federeinrichtung (21), wobei, vorzugsweise, eine das Überspringen des Antriebszahnrads (20) im Profil (5) verhindernde Blockiervorrichtung (28) vorgesehen ist.

11. Anlage nach wenigstens einem der vorhergehenden Ansprüche, **dadurch gekennzeichnet, dass** die Anpresskräfte für das Reibrad (19) und das Antriebszahnrad (20) zumindest weitgehend im Gleichgewicht sind.

12. Anlage nach wenigstens einem der vorhergehenden Ansprüche, **dadurch gekennzeichnet, dass** das Profil (5) entweder ein starres Profil (24) oder eine Gliederkette, vorzugsweise eine Rollengliederkette, ist, und auf oder unter einem Quersteg (13) des I-Profils (2) verschraubt ist, wobei der Abstand des Profils (24) oder der Gliederkette vom Hochsteg (11) einstellbar ist.

13. Anlage nach wenigstens einem der vorhergehenden Ansprüche, **dadurch gekennzeichnet, dass** der Roboter (R) mit zwei beabstandeten Laufkatzen (8, 9) an der Hängeschienenstrecke (1) abgehängt ist, und dass, vorzugsweise, nur eine Laufkatze (9) den wenigstens einen Roboter-Fahrantrieb (10) aufweist.

14. Selbstfahrender Roboter (R), für eine landwirtschaftliche Anlage (FA) mit einer Hängeschienenstrecke (1), wobei zum Fahren des Roboters (R) entlang der Hängeschienenstrecke 1 der Roboter (R) wenigstens einen Roboter-Fahrantrieb (10) für wenigstens ein drehantreibbares Antriebszahnrad (20) mit formschlüssigen Eingriffselementen (25) sowie einen Antriebsmotor (16) und eine Bremsvorrichtung (17), sowie wenigstens einen Behälter (6) aufweist, und wobei zum Übertragen von Fahr- und Brems-Drehmomenten zwischen dem Roboter-Fahrantrieb (10) und der Hängeschienenstrecke (1) eine mechanische Antriebsverbindung vorgesehen ist, **dadurch gekennzeichnet, dass** der Roboter-Fahrantrieb (10) eine Kombination eines reibschlüssigen Reibrad-Antriebs (F) für eine reibschlüssige mechanische Antriebsverbindung mit der Hängeschienenstrecke (1) und eines formschlüssigen Zahnrad-Antriebs (A) für eine formschlüssige mechanische Antriebsverbindung mit der Hängeschienenstrecke (1) aufweist und wahlweise oder automatisch zwischen beiden Antrieben umstellbar ist.

15. Selbstfahrender Roboter nach Anspruch 14, **dadurch gekennzeichnet, dass** der Roboter-Fahrantrieb (10) auf einer gemeinsamen Welle (X) im Reibrad-Antrieb (F) wenigstens ein drehantreibbares Reibrad (19) und im Zahnrad-Antrieb (A) das drehantreibbare Antriebszahnrad (20) mit den formschlüssigen Eingriffselementen (25) umfasst.

## Claims

1. Agricultural plant (FA), in particular for productive life stock, comprising a stationarily installed suspension rail route (1) and at least one self-propelled robot (R) running at the suspension rail route (1), the robot having at least one container (6) and at least one rotary driven robot-drive (10) for moving the robot (R) along the suspension rail route (1), wherein for transmitting driving and braking torques between the robot (R) and the suspension rail route (1) a mechanic drive connection is provided and a positive locking drive connection can be established at least in a section (4) of the suspension rail route (1) between the robot-drive (10) of the robot (R) and the suspension rail route (1), **characterized in that** the robot-drive (10) of the robot (R) is a combination of a friction wheel drive (F) for a frictionally engaged mechanic drive connection with the suspension rail route (1) and a gear wheel drive (A) for a positive locking mechanic drive connection with the suspension rail route (1) and that the robot-drive (10) can be shifted between both drive modes.

2. Plant according to claim 1, **characterized in that** a preferably either replaceable installed (threaded at 24) or directly integrated profile (5) having engagement recesses (22), preferably made from hardened steel, is provided in the section (4) of the suspension rail route (1), the section (4), preferably, having a downward slope or a bent, and the gear wheel drive (A) of the robot (R) comprises engagement elements (25), preferably made from hardened steel, which can be brought into engagement in the engagement recesses (22) for transmitting torques in positive locking fashion.

3. Plant according to claim 2, **characterized in that** the profile (5) is formed like a toothed rack, preferably having an involute spur toothing or a helical gearing, and that the engagement elements (25) are formed as involute gears of a gear wheel or of a sprocket (20).

4. Plant according to claim 2, **characterized in that** the engagement recesses (22) are rounded, preferably about semi-circularly, and that the engagement elements (25) are formed with a rounded outer contour.

5. Plant according to at least one of the preceding claims, **characterized in that** the engagement elements (25) are constituted at the gear wheel (20) by pins oriented crosswise to the profile (5), the pins being either supported in rotatable fashion or carrying rotatable sleeves, and that, preferably, the gear wheel (20) comprises two distant wheel discs which are connected with each other in torque proof fashion, in which wheel discs (17) the pins respectively carrying the sleeves are anchored in replaceable fashion or in which the sleeve-free pins are supported replaceably and rotatably.

6. Plant according to claim 1, **characterized in that** the active diameter of the gear wheel drive (A), with regard to the suspension rail route (1), is smaller than the active diameter (Y') of the friction wheel drive (F).

7. Plant according to claim 1, **characterized in that** the suspension rail route (1) comprises an upright installed I-beam (2) and that the friction wheel drive (F) engages at a vertical web (11) and the gear wheel drive (A) engages in the region of a cross web (14) of the I-beam (2), wherein, preferably, the robot-drive (10) additionally is supported by fixedly installed free running supporting rollers (14) at both sides of the vertical web (11) and/or by idler rollers (15) at the cross web (13).

8. Plant according to claim 1, **characterized in that** the fiction wheel drive (F) and the gear wheel (A) either share a common driving shaft (X) coupled to an electric or hydraulic drive motor (16) and to a braking device (17), or that the friction wheel drive (F) and the gear wheel drive (A) comprise separate shafts, and that, preferably, separate drive motors and braking devices and optionally reduction gearing mechanisms are provided for the shafts.

9. Plant according to claim 1, **characterized in that** the friction wheel drive (F) comprises at least one driven friction wheel (19) and one freely running friction wheel (19'), which selectively can be pressed by spring load of a spring assembly (21) against opposite sides of a vertical web (11) of an I-beam of the suspension rail route (1), wherein the driven friction wheel (19) can be lifted from the vertical web (11) in case of an engagement of the engagement elements (25) at the profile (5).

10. Plant according to claim 9, **characterized in that** each engagement recess (22) has a distance from the vertical web (11) of the I-beam (1), which is selected so with regard to the radius (Y') of the rotatably driven friction wheel (19) that in case of an engagement between the engagement elements (25) and the engagement recesses (22) the rotatably driven friction wheel (19) is lifted form the vertical web and that the engagement elements (25) are pressed into the engagement recesses (22), preferably by spring load of the spring assembly (21), wherein, preferably, a blocking device (28) is provided for preventing vaulting of the drive gear wheel (20) in the profile (5).

11. Plant according to at least one of the preceding claims, **characterized in that** the pressing forces for the friction wheel (19) and for the driving gear wheel (20) are balanced at least substantially.

12. Plant according to at least one of the preceding claims, **characterized in that** the profile (5) either is a rigid profile (24) or a link chain, preferably a roller link chain, and is threaded to or underneath a cross web (13) of the I-beam (2), wherein the distance of the profile (24) or of the link chain from the vertical web (11) can be adjusted.

13. Plant according to at least one of the preceding claims, **characterized in that** the robot (R) runs with two distant travelling trolleys (8, 9) at the suspension rail route (1), and that, preferably, only one travelling trolley (9) comprises the at least one robot-drive (10).

14. Self-propelled robot (R) for an agricultural plant (FA), comprising a suspension rail route (1), wherein for driving the robot (R) along the suspension rail route (1) the robot (R) comprises at least one robot-drive (10) for at least one rotatably driven driving gear wheel (10) having positive locking engagement elements (25) and a drive motor (16) and a braking device (17), as well as at least one container (6) and wherein for transmitting driving and braking torques between the robot-drive (10) and the suspension rail route (1) a mechanic drive connection is provided, **characterized in that** the robot-drive (10) comprises a combination of a frictionally engaging friction wheel drive (F) for a frictionally engaged mechanic drive connection with the suspension rail route (1) and of a positive locking gear wheel drive (A) for a positive locking mechanic drive connection with the suspension rail route (1), and that the robot-drive (10) can be shifted either selectively or automatically between both drive modes.

15. Self-propelled robot according to claim 14, **characterized in that** the robot-drive (10) comprises on a common shaft (X) at least one rotatably drivable friction wheel (19) in the friction wheel drive (F) and the rotatably drivable driving gear wheel (20) with the positive locking engagements (25) in the gear wheel drive (A).

## Revendications

1. Installation agricole (FA), en particulier pour des animaux de rente, comportant une voie ferrée suspendue (1) installée de manière fixe et au moins un robot (R) autopropulsé, suspendu sur la voie ferrée suspendue (1), qui présente au moins un conteneur (6) et au moins un entraînement de déplacement de robot (10) entraîné en rotation pour déplacer le robot (R) le long de la voie ferrée suspendue (1), dans lequel une liaison d'entraînement mécanique est prévue pour la transmission des couples de déplacement et de freinage entre le robot (R) et la voie ferrée suspendue (1) et une liaison d'entraînement positive peut être réalisée au moins dans une section (4) de la voie ferrée suspendue (1) entre l'entraînement de déplacement du robot (10) du robot (R) et la voie ferrée suspendue (1), **caractérisé en ce que** l'entraînement de déplacement du robot (10) du robot (R) est une combinaison d'un entraînement à roues de friction (F) pour une liaison d'entraînement mécanique par friction avec la voie ferrée suspendue (1) et d'un entraînement à roues dentées (A) pour la liaison d'entraînement mécanique par complémentarité de formes avec la voie ferrée suspendue (1), et **en ce que** l'entraînement de déplacement du robot (10) peut être commuté entre les deux entraînements.

2. Installation selon la revendication 1, **caractérisée en ce que** dans la section (4) de la voie ferrée suspendue (1), présentant de préférence une pente ou une courbe, se trouve un profil (5) avec des évidements d'engagement (22), de préférence installé de manière interchangeable (vissé à (24)) ou directement moulé, de préférence en acier trempé, et **en ce que** l'entraînement par engrenage (A) du robot (R) comporte des éléments d'engagement (25), de préférence en acier trempé, qui peuvent être mis en prise dans les évidements d'engagement (22) pour la transmission du couple d'engagement par liaison mécanique.

3. Système selon la revendication 2, **caractérisé en ce que** le profil (5) est conçu à la manière d'une crémaillère, de préférence avec des dents droites ou hélicoïdales en développante, et les éléments d'engagement (25) sont conçus comme des dents en développante d'une roue dentée ou d'un pignon (20).

4. Système selon la revendication 2, **caractérisé en ce que** les évidements d'engagement (22) sont arrondis, de préférence approximativement semi-circulaires, et les éléments d'engagement (25) sont formés avec un contour extérieur rond.

5. Système selon au moins l'une des revendications précédentes, **caractérisé en ce que** les éléments d'engagement (25) sur la roue dentée (20) sont formés par des goupilles orientées transversalement au profil (5), qui sont soit montées de manière rotative, soit portent des manchons rotatifs, et **en ce que**, de préférence, la roue dentée (20) comprend deux disques de roue (27) espacés l'un de l'autre qui sont reliés l'un à l'autre de manière non rotative et dans lesquels les goupilles respectives portant les manchons sont ancrées de manière interchangeable ou les goupilles sans manchon sont montées de manière interchangeable et rotative.

6. Système selon la revendication 1, **caractérisé en ce que** le diamètre effectif de l'entraînement par engrenage (A), par rapport à la section du voie ferrée suspendue (1), est inférieur au diamètre effectif (Y1) de l'entrainement par roue de friction (F).

7. Système selon la revendication 1, **caractérisé en ce que** la voie suspendue (1) présente une poutre en I (2) installée verticalement, et **en ce que** l'entraînement par roue de friction (F) s'engage sur l'âme surélevée (11) et l'entraînement par engrenage (A) s'engage dans la zone d'une âme transversale (13) de la poutre en I (2), dans lequel, de préférence, l'entraînement de déplacement du robot (10) est en outre supporté par des rouleaux de support (14) installés de manière rigide et tournant librement des deux côtés de l'âme surélevée (11) et/ou par des rouleaux (15) sur la bande transversale (13).

8. Système selon la revendication 1, **caractérisé en ce que** soit l'entraînement par roue de friction (F) et l'entraînement par engrenage (A) partagent un arbre d'entraînement commun (X) qui est couplé à un moteur d'entraînement électrique ou hydraulique (16) et à un dispositif de freinage (17), soit l'entraînement par roue de friction (F) et l'entraînement par engrenage (A) ont des arbres séparés, et, de préférence, des moteurs d'entraînement et des dispositifs de freinage séparés et, le cas échéant, des réducteurs sont prévus pour les arbres.

9. Système selon la revendication 1, **caractérisé en ce que** l'entraînement par roue de friction (F) comprend au moins une roue de friction entra née (19) et une roue de friction libre (19'), qui peuvent être pressées sélectivement contre des côtés opposés d'une âme surélevée (11) du rail de voie ferrée suspendue (1) avec la précontrainte d'un dispositif à ressort (21), la roue de friction entraînée (19) pouvant être soulevée de l'âme surélevée (11) lorsque les éléments d'engagement (25) sur le profilé (5) s'engagent.

10. Système selon la revendication 9, **caractérisé en ce que** chaque évidement d'engagement (22) se trouve à une distance de l'âme surélevée (11) de la poutre en I (2) qui est ainsi réglée par rapport au rayon (Y1) de la roue de friction (19) entraînée en rotation, **en ce que**, en cas d'engagement entre les éléments d'engagement (25) et les évidements d'engagement (22), la roue de friction (19) entraînée en rotation est soulevée de la bande soulevée et les éléments d'engagement (25) sont enfoncés dans les évidements d'engagement (22), de préférence par précontrainte élastique du dispositif à ressort (21), un dispositif de blocage (28) empêchant le saut de la roue d'entraînement (20) dans le profilé (5) étant de préférence prévu.

11. Installation selon au moins une des revendications précédentes, **caractérisée en ce que** les forces de pression de contact pour la roue de friction (19) et la roue d'entraînement (20) sont au moins largement en équilibre.

12. Installation selon au moins une des revendications précédentes, **caractérisée en ce que** le profil (5) est soit un profil rigide (24), soit une chaîne à maillons, de préférence une chaîne à maillons à rouleaux, et est vissé sur ou sous une âme transversale (13) du profil en I (2), la distance du profil (24) ou de la chaîne à maillons par rapport à l'âme surélevée (11) étant réglable.

13. Installation selon au moins une des revendications précédentes, **caractérisée en ce que** le robot (R) est suspendu à la voie ferrée suspendue (1) par deux chariots (8, 9) espacés l'un de l'autre, et que, de préférence, un seul chariot (9) possède le au moins un entraînement de déplacement du robot (10).

14. Robot autopropulsé (R), pour une installation agricole (FA) avec une voie ferrée suspendue (1), dans lequel, pour le déplacement du robot (R) le long de la voie ferrée suspendue (1), le robot (R) présente au moins un entraînement de déplacement de robot (10) pour au moins une roue dentée d'entraînement (20) pouvant être entraînée en rotation avec des éléments à engagement positif (25), ainsi qu'un moteur d'entraînement (16) et un dispositif de freinage (17), ainsi qu'au moins un récipient (6), et dans lequel une liaison d'entraînement mécanique est prévue pour la transmission des couples de déplacement et de freinage entre l'entraînement de déplacement du robot (10) et la voie ferrée de suspension (1), **caractérisé en ce que en ce que** l'entraînement de déplacement du robot (10) comporte une combinaison d'un entraînement par roue à friction (F) pour une liaison d'entraînement mécanique par friction avec la voie ferrée suspendue (1) et d'un entraînement par roue dentée positive (A) pour une liaison d'entraînement mécanique positive avec la voie ferrée suspendue (1) et peut être commuté entre les deux entraînements soit sélectivement soit automatiquement.

15. Robot autopropulsé selon la revendication 14, **caractérisé en ce que** l'entraînement de déplacement du robot (10) comprend au moins une roue de friction (19) pouvant être entraînée en rotation sur un arbre commun (X) dans l'entraînement de la roue de friction (F) et l'engrenage d'entraînement (20) pouvant être entraîné en rotation avec les éléments d'engagement positif (25) dans l'entraînement d'engrenage (A).
